# EUROPÄISCHE PATENTSCHRIFT

(11) **EP 0 396 942 B1**
(45) Veröffentlichungstag und Bekanntmachung des Hinweises auf die Patenterteilung: **21.06.1995**
(21) Anmeldenummer: 90107319.7
(22) Anmeldetag: 18.04.1990
(51) Int. Cl.: B29C 33/72, B30B 15/00

(54) **Verfahren zur Reinigung der Distanzen an aushärtbare Kunststoffe verarbeitenden Presswerkzeugen und Presswerkzeug mit einer Reinigungsvorrichtung zur Durchführung des Verfahrens**
Method for cleaning spacer elements of moulding presses for curable plastics and press comprising a cleaning arrangement for realizing this method
Procédé pour nettoyer les éléments d'espacement de presses pour matière plastique durcissable et presse comprenant un dispositif de nettoyage pour réaliser ce procédé

(30) Priorität: 11.05.1989 DE 3915379
(43) Veröffentlichungstag der Anmeldung: 14.11.1990
(73) Patentinhaber: Umformtechnik ERFURT GmbH, D-99086 Erfurt (DE)
(72) Erfinder: Brüssel, Richard, Dipl.-Ing., D-7519 Sulzfeld (DE)

(56) Entgegenhaltungen:
- DE-B- 1 241 603
- DE-C- 670 180
- DE-U- 1 780 471
- US-A- 4 605 170

## Beschreibung

Die Erfindung bezieht sich auf ein Verfahren zur Reinigung der Distanzen am Ober- und Unterteil von Preßwerkzeugen für die Ausformung von Preßteilen aus aushärtbaren Kunststoffen, insbesondere in automatisch arbeitenden Pressen, und ein Preßwerkzeug mit einer Reinigungsvorrichtung zur Durchführung des Verfahrens.

Preßwerkzeuge mit dem hier interessierenden Anwendungsbereich weisen zur Begrenzung der Schließbewegung während des Preßvorgangs mechanische Anschläge, sogenannte Distanzen, auf. Diese kommen im Normalfall nicht miteinander in Berührung, da die aufgebrachte Preßkraft ausschließlich auf den zu verformenden Kunststoff einwirken soll; am Ende der Schließbewegung, d.h. nach Beendigung des Preßvorgangs, liegt zwischen den sich paarweise gegenüberliegenden Distanzen ein Distanzen-Spalt in der Größenordnung von einigen Zehntel Millimetern - zwischen 0,1 bis 0,3 mm - vor.
Falls die das Preßwerkzeug aufnehmende Presse parallelgeregelte Gegenhaltezylinder aufweist, dienen die Distanzen darüber hinaus zur Eichung dieser Parallelregelung, die durch einen Leerhub des Preßwerkzeugs, also ohne als Preßmasse dienenden aushärtbaren Kunststoff, ausgeführt wird.

Bei manuell beschickten Pressen kamen bisher Preßwerkzeuge zum Einsatz, die außerhalb ihres Formhohlraums (Kavität) über ihren gesamten Umfang mit sich jeweils paarweise gegenüberliegenden Distanzen ausgestattet sind. Da diese zur Vermeidung einer unerwünschten Brückenbildung regelmäßig von Gratresten gesäubert werden müssen, führt dies mit Rücksicht auf die Wirtschaftlichkeit und Betriebssicherheit automatisch arbeitender Pressen zu der Forderung, maschinell zu reinigende Preßwerkzeuge in gut zugänglicher Weise mit einer möglichst geringen Anzahl Distanzen auszustatten.
Mit einer derartigen Ausbildung wird gleichzeitig der weiteren Forderung entsprochen, für die Eichung der Parallelregelung eine statisch bestimmte Auflage sicherzustellen.

Die automatische Reinigung der Distanzen wird bisher lediglich bei stillstehendem, geöffnetem Preßwerkzeug mittels Bürsten und/oder Blasdüsen durchgeführt, und zwar nach jedem Preßzyklus, da einmal eingeklemmte und dadurch fest angepreßte Teilchen nur von Hand sicher von den Distanzen entfernt werden können.
Bei Fressen mit Prozeßüberwachung führen an den Distanzen anhaftende Teilchen zur Störabschaltung (mit der sich daraus ergebenden Verminderung der Produktionsleistung); bei nicht überwachten Fressen kann die Bildung von Kraftbrücken zwischen den Distanzen dazu führen, daß entweder Preßteile mit verminderter Qualität entstehen oder Ausschuß produziert wird.

Aus der DE - B-1 241 603 ist eine Etagenpresse für die Herstellung von Spanplatten, Faserplatten oder dgl. mit zumindest zwei Pressplatten und auf der (jeweils) unteren Pressplatte angeordneten Distanz- oder Beilegeleisten bekannt, bei der zur Beseitigung von sich von dem zu pressenden Gut lösenden Spänen, Fasern oder Staub, die sich auf den Distanz- oder Beilegeleisten ablagern können, die (jeweils) obere Pressenplatte im Bereich ihrer Längsränder einen längslaufenden Spülluftkanal mit schräg nach außen auf die Distanz- oder Beilegeleisten gerichteten Spülluft-Austrittsbohrungen oder -düsen aufweist. Dabei besteht trotz vorhergehender sorgfältiger Reinigung der Distanzen während des Schließvorgangs des Preßwerkzeugs die Gefahr, daß durch Luftverdrängung aus dem Formhohlraum in diesem verbliebene Späne, Fasern oder Gratreste zwischen die Distanzen gedrückt werden und, da der gegenseitige Abstand der Distanzen nach Einleiten des Schließvorgangs sehr rasch entsprechend kleine Werte annimmt, sich dort festsetzen können.

Der Erfindung liegt die Aufgabe zugrunde, ein Verfahren und eine Preßwerkzeug anzugeben, welches die Gefahr beseitigt, daß während des Schließvorganges des Presswerkzeuges durch die Luftverdrängung aus dem Formhohlraum in diesem verbliebene Verunreinigungen zwischen die Distanzen gedrückt werden und die Reinigung der Distanzen auch dann ermöglicht, wenn die zusammengehörigen Distanzen sich im Laufe des Schließvorgangs schon sehr weitgehend aneinander angenähert haben.

Die gestellte Aufgabe wird durch ein Verfahren mit den Merkmalen des Anspruchs 1 gelöst. Der Grundgedanke der Erfindung besteht danach darin, während des Schließvorgangs des Preßwerkzeugs zeitweilig in den Spalt, der von den sich gegenüberliegenden Distanzen gebildet wird, Gas einzublasen. Vorzugsweise wird der Blasvorgang, der in jedem Fall bis gegen Ende des Schließvorgangs beibehalten wird, erst eingeleitet, nachdem die Distanzen sich auf einen vorgegebenen Abstand aneinander angenähert haben. Das Verfahren kann dabei insbesondere in der Weise ausgeführt werden, daß während der gesamten, für das Auspressen benötigten Zeitspanne Gas eingeblasen wird; der Blasvorgang wird danach eingeleitet, sobald das bewegliche Werkzeugteil (im Normalfall: das Werkzeugoberteil) an den für seinen Parallellauf vorgesehenen Gegenhaltezylindern zur Anlage gekommen ist, und erst nach dem Stillstand des beweglichen Werkzeugteils bei Auspreßende unterbrochen; der während dieser Zeitspanne zurückgelegte Hub liegt im Normalfall in der Größenordnung von 30 bis 40 mm. Der Beginn und die Zeitdauer des Blasvorgangs lassen sich dabei in einfacher Weise durch einen zeitgesteuerten Schalter festlegen; dessen Zählwerk kann beispielsweise mit dem Beginn des Schließvorgangs in Betrieb gesetzt werden. Eine andere vorteilhafte Möglichkeit der Beeinflussung des zeitlichen Ablaufs des Blasvorgangs besteht darin, die den in Abhängigkeit von einer Abstandsmessung zwischen dem Werkzeugoberteil und -unterteil oder in Abhängigkeit von der Lage des Werkzeugoberteils einzuleiten bzw. zu unterbrechen.
In jedem Falle sollte der Beginn und die Zeitdauer des Blasvorgangs so gewählt werden, daß zwischen die Distanzen gelangte Teilchen aus deren Bereich entfernt werden, bevor sie festgeklemmt werden.

Das Verfahren wird in der Weise ausgeführt, daß ein Sperrgasstrom erzeugt wird, welcher der aus dem Preßwerkzeug austretenden Strömung entgegengerichtet ist (Anspruch 1) . Die geeignete Bemessung des Sperrgasstromes, zumindest gegen Ende des Schließvorgangs, dient zur Bildung eines im Distanzen-Spalt wirksamen Sperrgaspolsters, welches diesen gegen die aus dem Preßwerkzeug austretende Strömung abschirmt (Anspruch 2).

Das zur Durchführung des Verfahrens geeignete Preßwerkzeug mit einer Reinigungsvorrichtung ist zumindest mit einer Blasleiste ausgestattet, deren in der Betriebsstellung auf den Distanz-Spalt ausgerichtete Blasöffnungen in geringer Entfernung zu den Distanzen angeordnet sind (Anspruch 3).
Damit insbesondere die Distanzen des Werkzeugunterteils vor Einleiten des Schließvorgangs zugänglich sind, ist die zumindest eine Blasleiste am Werkzeugoberteil gehalten. Mittels der Blasleiste läßt sich ein Sperrgaspolster zur Abschirmung des Distanzen-Spaltes insbesondere dadurch erzeugen, daß jede Blasleiste - bezogen auf den Formhohlraum des Preßwerkzeugs - der Außenseite der zusammengehörigen Distanzen gegenüberliegt.
Bei einer bevorzugten Ausführungsform des Erfindungsgegenstandes ist jede Blasleiste bezüglich des Preßwerkzeugs höhenverstellbar; auf diese Weise läßt sich die Lage der Blasleiste bzw. der Blasöffnungen erforderlichenfalls auch nach dem Anbringen am Preßwerkzeug nachträglich feinfühlig einstellen.

Das zur Durchführung des Verfahrens geeignete Preßwerkzeug mit einer Reinigungsvorrichtung kann jedoch auch in der Weise ausgebildet sein, daß das der Reinigung dienende Gas über in den Distanzen selbst angeordnete Bohrungen zugeführt wird (Anspruch 5). Diese sind vorzugsweise bezüglich der Distanzen-Oberfläche (die der Oberfläche der benachbarten Distanz zugewandt ist) schräg angeordnet, und zwar in Richtung auf den Formhohlraum des Preßwerkzeugs.
Die in Rede stehende Ausführungsform des Erfindungsgegenstandes kann dadurch weiter ausgestaltet sein, daß die Distanzen-Bohrungen an der bereits erwähnten Distanzen-Oberfläche in Nuten übergehen, die auf den Formhohlraum ausgerichet sind.
Zweckmäßig weisen jeweils nur die Distanzen des Werkzeugoberteils derartige Bohrungen auf.

Die Erfindung wird nachfolgend anhand eines in der Zeichnung stark schematisiert dargestellten Ausführungsbeispiels erläutert.

Es zeigen:
- Fig. 1: einen Vertikalschnitt durch ein Preßwerkzeug im Bereich der Distanzen und
- Fig. 2: eine Ansicht von unten auf das in Fig. 1 dargestellte Werkzeugoberteil.

Das Preßwerkzeug 1 setzt sich aus einem beweglich gehaltenen Werkzeugoberteil 2 und einem unbeweglichen Werkzeugunterteil 3 zusammen, deren ineinandergreifende Tauchkanten 2a bzw. 3a während des Preßvorgangs in der Schließstellung einen Formhohlraum 4 begrenzen; dieser legt die Form des herzustellenden Preßteils fest.

Außerhalb des Bereichs des Formhohlraums 4 und der Tauchkanten 2a, 3a sind die Teile 2 und 3 im Mittelbereich ihrer Längsseiten jeweils mit fest eingebauten, plattenförmigen mechanischen Anschlägen, den sogenannten Distanzen 5 bzw. 6, ausgestattet: jeder Distanz 5 des Werkzeugoberteils 2 liegt eine Distanz 6 des Werkzeugunterteils 3 gegenüber.
Die Distanzen 5 und 6 sind in der Weise angeordnet, daß sie nach Beendigung des Preßvorgangs, also auch des Schließvorgangs, miteinander einen Distanzen-Spalt 7 bilden, der üblicherweise in der Größenordnung von einigen Zehntel Millimetern liegt.

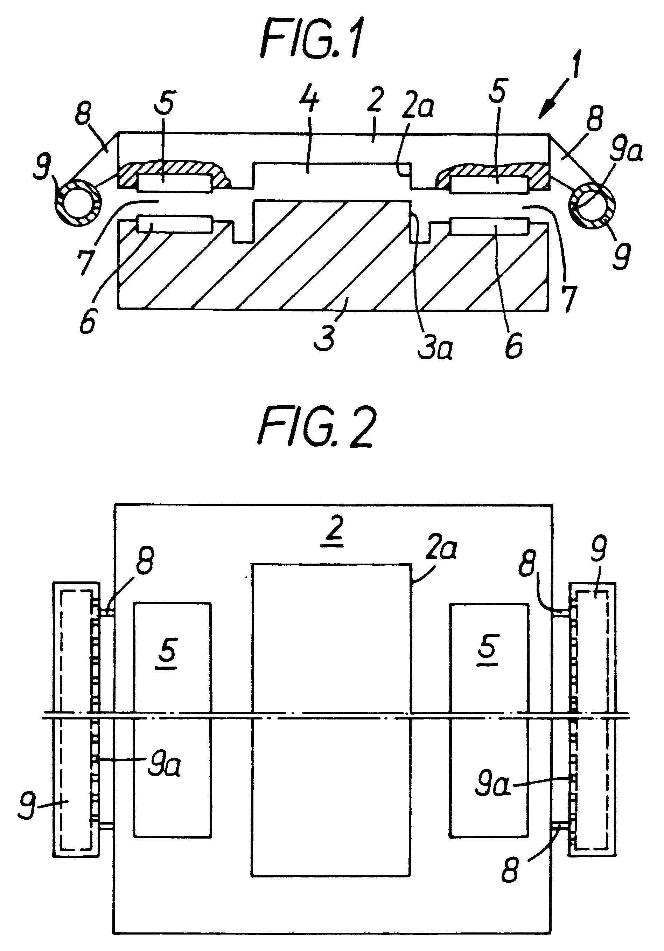

An jeder Längsseite des Werkzeugoberteils 2 ist im Bereich der Distanzen 5, 6 jeweils über zwei Haltebleche 8 eine rohrförmige Blasleiste 9 befestigt, deren Blasöffnungen 9a über die Länge der Distanzen 5, 6 verteilt liegen und (in der in Fig. 1 dargestellten Betriebsstellung) auf den Distanzen-Spalt 7 ausgerichtet sind.
Die beiden Blasleisten 9, deren Länge größer bemessen ist als die Länge der benachbarten Distanzen 5 und 6, sind über eine nicht dargestellte Versorgungsleitung an eine Druckquelle anschließbar.
Das Betriebsmittel für die Blasleisten 9 besteht im einfachsten Fall aus Luft, die erforderlichenfalls zuvor durch Filterung gereinigt worden ist; selbstverständlich können die Blasleisten beispielsweise auch mit einem Inertgas beaufschlagt werden.

Mittels der Blasleisten 9 läßt sich ein an den Distanzen 5 und 6 vorbeistreichender, ins Innere des Preßwerkzeugs gerichteter Sperrgasstrom erzeugen; dieser wirkt der aus dem Preßwerkzeug austretenden Strömung entgegen und verhindert somit die Anlagerung von Teilchen an bzw. zwischen den zusammengehörigen Distanzen 5 und 6.

Zweckmäßigerweise werden die Blasleisten 9 durch Zuschalten der Druckquelle erst dann in Betrieb gesetzt, wenn sich die Distanzen 5 und 6 auf einen vorgegebenen Abstand aneinander angenähert haben, d.h. wenn der Distanzen-Spalt 7 während des Schließvorgangs einen vorgegebenen Höchstwert unterschritten hat. Danach wird der Blasvorgang - beispielsweise in Abhängigkeit von einer Zeitmessung oder einer Abstandsmessung - erst gegen Ende des Schließvorgangs (d.h. gegen Ende des Preßvorgangs) unterbrochen.

Der mit der Erfindung erzielte Vorteil besteht darin, daß sich auf einfache Weise die Verunreinigung der Distanzen auch während eines Zeitabschnitts verhindern läßt, zu dem der reinzuhaltende bzw. zu reinigende Bereich von außen praktisch nicht zugänglich ist.

## Patentansprüche

1. Verfahren zur Reinigung der Distanzen (5,6) am Ober- und Unterteil (2,3) von Preßwerkzeugen (1) für die Ausformung von Preßteilen aus aushärtbaren Kunststoffen, insbesondere in automatisch arbeitenden Pressen, wobei während des Schließvorgangs des Preßwerkzeugs (1) zeitweilig, zumindest beginnend nach einer gegenseitigen Annäherung der sich gegenüberliegenden Distanzen (5,6) auf einen vorgegebenen Abstand bis gegen Ende des Schließvorgangs, in den Distanzen-Spalt (7) Gas eingeblasen wird,
dadurch gekennzeichnet,
daß ein Sperrgasstrom erzeugt wird, welcher der aus dem Preßwerkzeug (1) austretenden Strömung entgegengerichtet ist.

2. Verfahren nach Anspruch 1,
dadurch gekennzeichnet,
daß die Stärke des Sperrgasstromes, zumindest gegen Ende des Schließvorgangs, in der Weise eingestellt wird, daß der Distanzen-Spalt (7) gegen die aus dem Preßwerkzeug (1) austretende Strömung abgeschirmt wird.

3. Preßwerkzeug mit einer Reinigungsvorrichtung zur Durchführung des Verfahrens nach Anspruch 1, bestehend aus einem beweglichen Werkzeugoberteil (2), einem feststehenden Werkzeugunterteil (3) und zwischen den beiden Werkzeugteilen angeordneten Distanzen (5,6), wobei das Preßwerkzeug (1) zumindest mit einer Blasleiste (9) ausgestattet ist, deren in der Betriebsstellung auf den Distanzen-Spalt (7) ausgerichtete Blasöffnungen (9a) in geringer Entfernung zu den Distanzen (5,6) angeordnet sind, und wobei die Blasleiste (9) am Werkzeugoberteil (2) gehalten ist,
dadurch gekennzeichnet,
daß jede Blasleiste (9) - bezogen auf den Formhohlraum (4) des Preßwerkzeugs (1) - der Außenseite der zusammengehörigen Distanzen (5,6) gegenüberliegt.

4. Preßwerkzeug mit einer Reinigungsvorrichtung nach Anspruch 3,
dadurch gekennzeichnet,
daß die zumindest eine Blasleiste (9) bezüglich des Preßwerkzeugs (1) höhenverstellbar ist.

5. Preßwerkzeug mit einer Reinigungsvorrichtung zur Durchführung des Verfahrens nach Anspruch 1, bestehend aus einem beweglichen Werkzeugoberteil (2), einem feststehenden Werkzeugunterteil (3) und zwischen den beiden Werkzeugteilen angeordneten Distanzen (5,6),
dadurch gekennzeichnet,
daß zumindest ein Teil der Distanzen (5 bzw. 6) mit Bohrungen ausgestattet sind, über die in den Distanzen-Spalt (7) zwischen den Distanzen (5,6) Gas einblasbar ist.

## Claims

1. Method of cleaning the distance pieces (5,6) on the upper and lower parts (2,3) of pressing tools (1) for forming out pressings from age-hardening plastics materials, particularly in presses which work automatically, wherein gas is blown into the gap (7) between the distance pieces during the closing operation of the pressing tool (1) in an intermittent manner, at least beginning after a mutual approach of the mutually opposed distance pieces (5,6) to a predetermined distance apart and continuing until towards the end of the closing operation,
characterized in that
a blocking gas current is produced which is directed oppositely to the flow passing out of the pressing tool (1).

2. Method according to Claim 1,
characterized in that
the intensity of the blocking gas current is adjusted, at least towards the end of the closing operation, in such a way that the gap (7) between the distance pieces is shielded from the flow passing out of the pressing tool (1).

3. Pressing tool having a cleaning device for performing the method according to Claim 1 consisting of a movable upper part (2) of the tool, a stationary lower part (3) of the tool and distance pieces (5,6) disposed between the two parts of the tool, wherein the pressing tool (1) is equipped with at least one blowing strip (9), the blowing apertures (9a) of which, being aimed at the gap (7) between the distance pieces in the operating position, are disposed at a slight distance from the distance pieces (5,6), and wherein the blowing strip (9) is supported on the upper part (2) of the tool,
characterized in that
each blowing strip (9) is located - referred to the moulding cavity (4) in the pressing tool (1) - opposite the outer side of the appertaining distance pieces (5,6).

4. Pressing tool having a cleaning device according to Claim 3,
characterized in that
the blowing strip (9), of which there is at least one, is vertically adjustable in relation to the pressing tool (1).

5. Pressing tool having a cleaning device for carrying out the method according to Claim 1 consisting of a movable upper part (2) of the tool, a stationary lower part (3) of the tool and distance pieces (5,6) disposed between the two parts of the tool,
characterized in that
at least part of the distance pieces (5 and/or 6) are equipped with bores via which gas can be blown into the gap (7) between the distance pieces (5,6).

## Revendications

1. Procédé de nettoyage des pièces d'écéartement (5, 6) disposées sur les pièces supérieure et inférieure (2, 3) d'outils de presse (1) pour le formage de pièces en matière plastique obtenues par pressage, en particulier dans des presses travaillant en automatique, étant entendu que du gaz est insufflé temporairement dans l'interstice (7) entre les pièces d'écartement, pendant l'opération de fermeture de l'outil de presse (1), au moins en commençant après que les pièces d'écartement (5, 6), situées en face les unes des autres, se soient rapprochées les unes par rapport aux autres d'une distance donnée à l'avance, jusqu'à la fin de l'opération de fermeture,
caractérisé en ce qu'il est réalisé un courant de gaz formant barrage, courant qui est dirigé en sens contraire de l'écoulement sortant de l'outil de presse (1).

2. Procédé suivant la revendication 1, caractérisé en ce que la force du courant de gaz formant barrage est réglé, au moins à la fin de l'opération de fermeture, de telle façon que l'interstice (7) entre les pièces d'écartement soit protégé par un écran contre l'écoulement sortant de l'outil de presse (1).

3. Outil de presse comportant un dispositif de nettoyage pour la mise en oeuvre du procédé de la revendication 1, comportant une pièce supérieure mobile (2) de l'outil de presse, une pièce inférieure fixe (3) de l'outil de presse, et des pièces d'écartement (5, 6) disposées entre ces deux pièces de l'outil de presse, étant entendu que l'outil de presse (1) est constitué d'au moins une rampe de soufflage (9), dont les ouvertures de soufflage (9a) dirigées, en position de fonctionnement, vers l'interstice (7) entre les pièces d'écartement, sont disposées à une faible distance des pièces d'écartement (5, 6) et étant entendu que la rampe de soufflage (9) est fixée sur la pièce supérieure mobile (2) de l'outil de presse,
caractérisé en ce que chaque rampe de soufflage (9) se trouve - par rapport au creux de moulage (4) de l'outil de presse (1) - en face du côté extérieur des pièces d'écartement (5, 6) qui se correspondent.

4. Outil de presse comportant un dispositif de nettoyage suivant la revendication 3,
caractérisé en ce qu'au moins une rampe de soufflage (9) est réglable en hauteur par rapport à l'outil de presse (1).

5. Outil de presse comportant un dispositif de nettoyage pour la mise en oeuvre du procédé suivant la revendication 1, comportant une pièce supérieure mobile (2) de l'outil de presse, une pièce inférieure fixe (3) de l'outil de presse, et des pièces d'écartement (5, 6) disposées entre ces deux pièces de l'outil de presse,
caractérisé en ce qu'au moins une partie des pièces d'écartement respectives (5, 6) sont réalisées avec des alésages, au travers desquels du gaz peut être insufflé dans l'interstice (7) entre les pièces d'écartement (5, 6).
